# EUROPÄISCHE PATENTANMELDUNG

(11) **EP 4 039 573 A1**
(43) Veröffentlichungstag der Anmeldung: **10.08.2022**
(21) Anmeldenummer: 22155586.5
(22) Anmeldetag: 08.02.2022
(51) Int. Cl.: B62M 6/55

(54) **LAGERUNG EINES GEFEDERTEN HINTERBAUS EINES FAHRRADS**

(30) Priorität: 09.02.2021 DE 102021201188
(71) Anmelder: ZF Friedrichshafen AG, 88046 Friedrichshafen (DE)
(72) Erfinder: Ziemer, Peter, 86825 Bad Woerishofen (DE); Doerr, Ulrich, 78467 Konstanz (DE); Berger, Lothar, 88085 Langenargen (DE); Bergmann, Guenter, 88099 Neukirch (DE)

(57) **Zusammenfassung**

Die Erfindung betrifft eine Anordnung mit einem Tretlagegehäuse (207), einer Hinterbaustrebe (103) und einer Tretkurbelwelle (303); wobei die Hinterbaustrebe (103) um eine mit einer Drehachse der Tretkurbelwelle (303) identische Schwenkachse verschwenkbar gelagert ist. Die Hinterbaustrebe (103) ist verschwenkbar in dem Tretlagergehäuse (207) gelagert.

## Beschreibung

Die Erfindung betrifft eine Anordnung nach dem Oberbegriff von Anspruch 1.

Bei aus dem Stand der Technik bekannten Lageranordnungen für einen gefederten Hinterbau eines Fahrrads sind die horizontal verlaufenden Hinterbaustreben direkt auf der Tretkurbelwelle gelagert. Infolgedessen sind eine Schwenkachse, um die der Hinterbau beim Einfedern verschwenkt wird, und eine Drehachse der Tretkurbelwelle identisch. Dies hat den Vorteil, dass es beim Einfedern nicht zu einem Pedalrückschlag kommt. Allerdings beansprucht die Lagerung der Hinterbaustreben Platz. Dies macht es schwierig, ein Getriebe oder einen Motor in das Tretlager zu integrieren.

Der Erfindung liegt die Aufgabe zugrunde, die Lagerung der Hinterbaustreben eines Fahrrads zu verbessern. Diese Aufgabe wird gelöst durch eine Anordnung nach Anspruch 1. Bevorzugte Weiterbildungen sind in den Unteransprüchen enthalten und ergeben sich aus nachfolgender Beschreibung sowie den in den Figuren dargestellten Ausführungsbeispielen.

Die Anordnung umfasst ein Tretlagergehäuse, eine erste Hinterbaustrebe und eine Tretkurbelwelle.

Ein Tretlagergehäuse ist definiert als ein Gehäuse, das ein Tretlager enthält. Mit Tretlager wird die Gesamtheit der Lager bezeichnet, mit denen die Tretkurbelwelle in dem Tretlagergehäuse gelagert ist. Vorzugsweise ist das Tretlagergehäuse Teil eines Fahrradrahmens. Insbesondere kann das Tretlagergehäuse einstückig in den Fahrradrahmen integriert sein.

Eine Hinterbaustrebe ist eine Strebe, die eine Aufnahme bzw. eine Befestigungsvorrichtung für ein Hinterrad mit dem Fahrradrahmen verbindet. Die Hinterbaustrebe bildet dabei einen Teil des Fahrradrahmens. An einem Ende der Hinterbaustrebe ist die Aufnahme für das Hinterrad fixiert. Insbesondere kann die Aufnahme für das Hinterrad einstückig mit der Hinterbaustrebe verbunden sein.

Die erste Hinterbaustrebe ist an einem der Aufnahme für das Hinterrad gegenüberliegenden Ende verschwenkbar gelagert. Die Lagerung erfolgt vorliegend derart, dass eine Schwenkachse der ersten Hinterbaustrebe, das heißt eine Achse, um welche die erste Hinterbaustrebe verschwenkbar ist, mit einer Drehachse der Tretkurbelwelle identisch ist.

Mit Verschwenkung wird eine Verdrehung bezeichnet, deren Drehwinkel beschränkt sein kann.

Erfindungsgemäß ist die Hinterbaustrebe verschwenkbar in dem Tretlagergehäuse gelagert. Ein entsprechendes Strebenlager, mit dem die Hinterbaustrebe verschwenkbar in dem Tretlagergehäuse gelagert ist, weist mindestens ein Laufflächenpaar auf. Dies sind zwei Laufflächen, die relativ zueinander um eine gemeinsame Drehachse verdrehbar sind, und die einen Lagerspalt bilden, der Wälzkörper enthält, oder der im Falle eines Gleitlagers trocken oder mindestens teilweise mit einem Schmierstoff gefüllt ist. Über das Laufflächenpaar stützt sich die Hinterbeustrebe direkt in dem Tretlagergehäuse ab

Die Hinterbaustrebe weist eine erste Lagerlauffläche eines Laufflächenpaars des Strebenlagers auf. Vorzugsweise ist die erste Lauffläche starr, das heißt unbeweglich bzw. ohne die Möglichkeit einer Relativbewegung in die erste Hinterbaustrebe integriert.

Das Tretlagergehäuse weist eine zweite Lauffläche desselben Laufflächenpaars auf. Auch die zweite Lauffläche ist vorzugsweise starr in das Tretlagergehäuse integriert.

Durch die erfindungsgemäße Anordnung stützt sich die Hinterbaustrebe über das Strebenlager direkt in dem Tretlagergehäuse ab. Dadurch verbessert sich gegenüber einer Lagerung der Hinterbaustrebe auf der Tretkurbelwelle die Belastbarkeit und Steifigkeit des Hinterbaus. Auch wird vermieden, dass bei einer Drehung der Tretkurbelwelle in dem Strebenlager Reibungsverluste entstehen.

In einer bevorzugten Weiterbildung weist die Hinterbaustrebe ein Lagerauge auf. Dies ist ein Bauteil mit einer Aussparung.

Weiterbildungsgemäß befindet sich das Tretlagergehäuse in der Aussparung. Dies bedeutet, dass das Lagerauge das Tretlagergehäuse mindestens teilweise umschließt. Dabei ist die erste Hinterbaustrebe in dem Lagerauge verschwenkbar in dem Tretlagergehäuse gelagert. Das Lagerauge weist also die erste Lauffläche des oben genannten Laufflächenpaars auf.

Bezüglich einer Drehachse der Tretkurbelwelle umschließt das Lagerauge das Tretlagergehäuse vorzugsweise in Umfangsrichtung.

Die Weiterbildung ermöglicht es, in dem Tretlagergehäuse enthaltene Bauteile innerhalb des Strebenlagers der ersten Hinterbaustrebe anzuordnen. Dadurch lässt sich der zwischen den Tretkurbeln vorhandene axiale Bauraum besser nutzen.

Das Lagerauge ist in einer darüber hinaus bevorzugten Weiterbildung zweistückig ausgeführt. Die zwei Stücke des Lagerauges können insbesondere miteinander verschraubt sein. Durch die zweistückige Ausführung lässt sich das Lagerauge sehr einfach auf dem Tretlagergehäuse montieren.

In einer bevorzugten Weiterbildung ist die Tretkurbel drehbar in dem Tretlagergehäuse gelagert. Dies bedeutet, dass die Anordnung ein erstes Wellenlager mit mindestens einem Laufflächenpaar aufweist. Die Tretkurbelwelle weist eine erste Lauffläche des Laufflächenpaars auf, das Tretlagergehäuse eine zweite Lauffläche. Dabei ist die erste Lauffläche bevorzugt starr, das heißt unbeweglich bzw. ohne die Möglichkeit einer Relativbewegung mit der Tretkurbelwelle verbunden. Ebenso ist die zweite Lauffläche bevorzugt starr mit dem Tretlagergehäuse verbunden.

Die erste Lauffläche und die zweite Lauffläche bilden einen Lagerspalt, in dem entweder Wälzkörper vorhanden sind, die auf der ersten Lauffläche und der zweiten Lauffläche abrollen, oder der im Fall eines Gleitlagers trocken oder mindestens teilweise mit Schmierstoff gefüllt ist. Über das Laufflächenpaar stützt sich die Tretkurbelwelle direkt in dem Tretlagergehäuse ab.

Um Bauraum zu sparen, sind das Wellenlager und das Strebenlager bevorzugt ineinander verschachtelt weitergebildet. Dabei ist das Wellenlager mindestens teilweise innerhalb des Strebenlagers, das heißt innerhalb eines von dem Strebenlager umschlossenen Bereichs angeordnet. Der von dem Strebenlager umschlossene Bereich befindet sich mittig des Strebenlagers, das heißt ausgehend von dem Strebenlager in Richtung der oben genannten Drehachse.

Die Weiterbildung bedingt eine axiale Überlappung zwischen dem Strebenlager und dem Wellenlager. Innerhalb dieser Überlappung ist sich auch ein Teil des Tretlagergehäuses angeordnet, in dem die Lager fixiert sind. Der Teil des Tretlagergehäuses befindet sich zudem radial zwischen dem Strebenlager und dem Wellenlager. Das Strebenlager ist dabei radial außerhalb des Teils des Tretlagergehäuses angeordnet, das Wellenlager radial innerhalb. Mindestens ein Teil des Strebenlagers, mindestens ein Teil des Wellenlagers und der genannte Teil des Tretlagergehäuses befinden sich zwischen zwei voneinander beabstandeten und radial verlaufenden, das heißt orthogonal zu der oben genannten Drehachse ausgerichteten Ebenen.

Bevorzugt ist die Anordnung mit einer zweiten Hinterbaustrebe, einer Ausgangswelle und einem Getriebe und/oder einem Motor weitergebildet. Die zweite Hinterbaustrebe ist analog zu der ersten Hinterbaustrebe verschwenkbar in dem Tretlagergehäuse gelagert. Die Ausgangswelle ist bevorzugt mit einem Kettenblatt oder einer Riemenscheibe verbunden oder verbindbar. Über das Getriebe, sofern vorhanden, sind die Tretkurbelwelle und die Ausgangswelle drehwirksam miteinander gekoppelt. Dies bedeutet, dass eine Drehung der Tretkurbelwelle über das Getriebe direkt oder in übersetzter Form auf die Ausgangswelle übertragen wird.

Der Motor ist, sofern vorhanden, triebwirksam mit der Ausgangswelle verbunden oder verbindbar. Dies bedeutet, dass sich die Ausgangswelle über den Motor mit Antriebsleistung beaufschlagen lässt. Ein von dem Motor aufgebrachtes Antriebsmoment wirkt dabei direkt oder in über das Getriebe auf die Ausgangswelle.

Das Getriebe und/oder der Motor sind weiterbildungsgemäß mindestens teilweise axial zwischen dem Strebenlager, mit dem die erste Hinterbaustrebe verschwenkbar in dem Tretlagergehäuse gelagert ist, und einem Strebenlager, mit dem die zweite Hinterbaustrebe verschwenkbar in dem Tretlagergehäuse gelagert ist, angeordnet.

Um weiteren Bauraum zu sparen, sind ein Wellenlager, mit dem die Tretkurbelwelle drehbar in der Ausgangswelle gelagert ist, und ein Wellenlager, mit dem die Ausgangswelle drehbar in dem Tretlagergehäuse gelagert ist, darüber hinaus bevorzugt ineinander verschachtelt weitergebildet. Das Wellenlager, mit dem die Tretkurbelwelle drehbar in der Ausgangswelle gelagert ist, ist mindestens teilweise innerhalb des Wellenlager angeordnet, mit dem die Ausgangswelle drehbar in dem Tretlagergehäuse gelagert ist. Das Wellenlager wiederum, mit dem die Ausgangswelle drehbar in dem Tretlagergehäuse gelagert ist, ist mindestens teilweise innerhalb des Strebenlagers angeordnet. Bevorzugt ist zudem das Wellenlager, mit dem die Tretkurbelwelle drehbar in der Ausgangswelle gelagert ist, mindestens teilweise innerhalb des Strebenlagers angeordnet.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
Fig. 1 einen Hinterbau eines Fahrrads;
Fig. 2 ein Tretlager in der Seitenansicht; und
Fig. 3 das Tretlager in einer Schnittdarstellung.

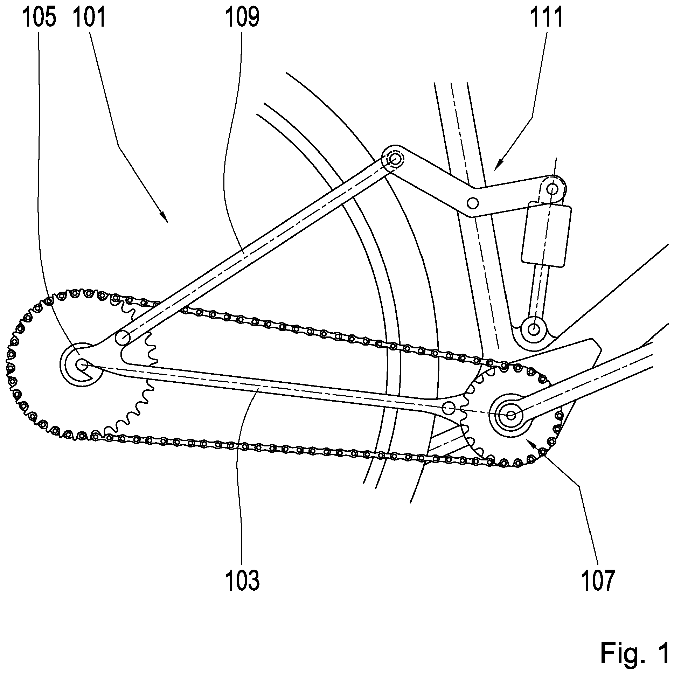

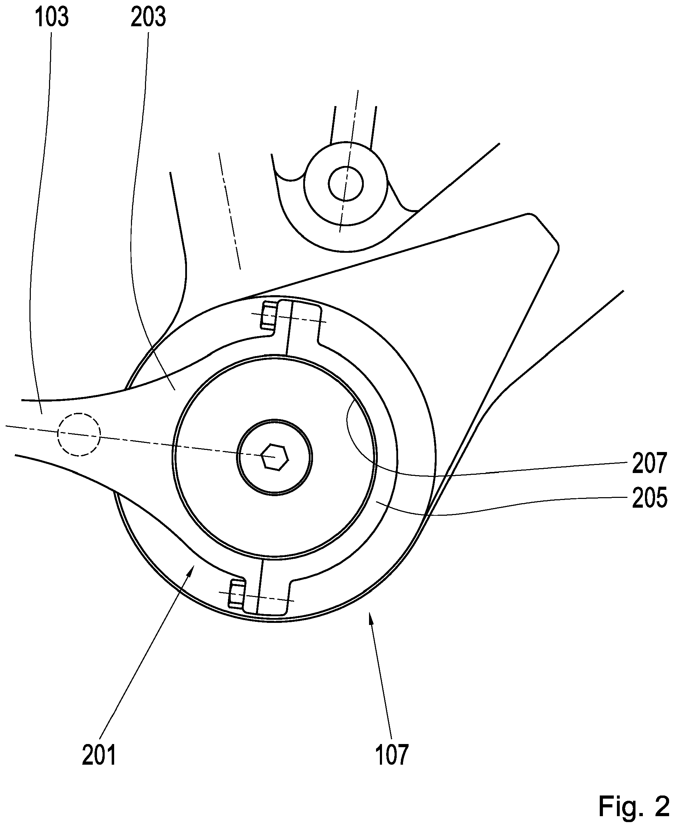

Der in Fig. 1 dargestellte Hinterbau 101 weist zwei Streben 103 auf, die jeweils eine Hinterradaufnahme 105 mit einem Tretlager 107 verbinden, und zwei Streben 109, die jeweils eine Hinterradaufnahme 105 mit einem oberhalb angeordneten Federmechanismus 111 verbinden. Federt der Federmechanismus 111 ein, werden die Streben 103 um eine Drehachse einer Tretlagerwelle des Tretlagers 107 verschwenkt. Eine entsprechende Befestigung der Streben 103 in dem Tretlager 107 zeigt Fig. 2. Hier ist zu erkennen, dass die Streben 103 jeweils ein Lagerauge 201 ausbilden, das aus einer ersten Halbschale 203 und einer zweiten Halbschale 205 besteht. Zur Montage werden die beiden Halbschalen 203, 205 miteinander verschraubt. Mit dem jeweiligen Lagerauge 201 sind die Streben 103 verschwenkbar in einem Tretlagergehäuse 207 gelagert.

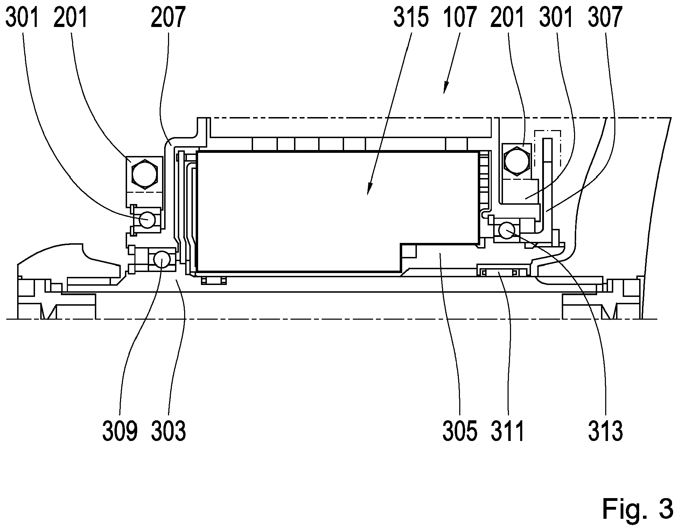

Um entsprechende Schwenkbewegungen der Streben 103 zu ermöglichen, sind Strebenlager 301 vorgesehen. Diese sind in Fig. 3 dargestellt. Die Streben 103 sind mittels jeweils eines Strebenlagers 301 mit dem jeweiligen Lagerauge 201 verschwenkbar in dem Tretlagergehäuse 207 gelagert.

Die Strebenlager 301 können, um Reibung zu minimieren, als Wälzlager ausgeführt sein oder, um Bauraum zu sparen und die Lagerung robuster zu gestalten, als Gleitlager.

In Fig. 3 sind weiterhin eine Tretkurbelwelle 303 und eine Ausgangswelle 305 dargestellt. Beide Wellen 303, 305 sind koaxial zueinander angeordnet. Dabei ist die Ausgangswelle 305 als Hohlwelle ausgeführt, durch welche die Tretkurbelwelle 303 hindurch verläuft. Ein Teil der Tretkurbelwelle 303 befindet sich also innerhalb der Ausgangswelle 305. Die Drehachsen der beiden Wellen 303, 305 sind identisch.

Die Ausgangswelle 305 weist einen Befestigungsflansch 307 für ein Kettenblatt auf.

Mittels eines ersten Wellenlagers 309 ist die Tretkurbelwelle 303 in dem Tretlagergehäuse 207 gelagert. Eine erste Lauffläche eines Laufflächenpaars des ersten Wellenlagers 309 ist dabei starr in dem Tretlagergehäuse 207 angeordnet. Entsprechend ist eine zweite Lauffläche des Laufflächenpaars bezüglich der Tretkurbelwelle 303 starr gehalten. Die Laufflächen werden etwa ausgebildet durch jeweils eine Lagerschale.

Mittels eines zweiten Wellenlagers 311 ist die Tretkurbelwelle 303 in der Ausgangswelle gelagert. Entsprechend ist das zweite Wellenlager 311 in einem Zwischenraum angeordnet, der sich zwischen der Tretkurbelwelle 303 und der Ausgangswelle 305 erstreckt. Eine erste Lauffläche eines Laufflächenpaars des zweiten Wellenlagers 311 ist starr mit der Ausgangswelle 305 verbunden, eine zweite Lauffläche des Laufflächenpaars mit der Tretkurbelwelle 303.

Zur Lagerung der Ausgangswelle 305 und damit indirekt auch der Tretkurbelwelle 303 dient ein drittes Wellenlager 313. Mit diesem ist die Ausgangswelle 305 in dem Tretkurbelgehäuse 207 gelagert. Dabei ist eine erste Lauffläche eines Laufflächenpaars des dritten Wellenlagers 313 starr mit dem Tretlagergehäuse 207 verbunden. Eine zweite Lauffläche des Laufflächenpaars ist starr mit der Ausgangswelle 305 verbunden.

Um ein auf die Tretkurbelwelle 303 aufgebrachtes Antriebsmoment an die Ausgangswelle 305 weiterzuleiten, ist ein Getriebe 315 vorgesehen. Dieses ist axial mittig zwischen den Lageraugen 201 und den Lagern 301, 309, 311, 313 angeordnet.

### Bezugszeichen

- 101: Hinterbau
- 103: Hinterbaustrebe
- 105: Hinterradaufnahme
- 107: Tretlager
- 109: Strebe
- 111: Federmechanismus
- 201: Lagerauge
- 203: erste Halbschale
- 205: zweite Halbschale
- 207: Tretlagergehäuse
- 301: Strebenlager
- 303: Tretkurbelwelle
- 305: Ausgangswelle
- 307: Befestigungsflansch
- 309: erstes Wellenlager
- 311: zweites Wellenlager
- 313: drittes Wellenlager
- 315: Getriebe

## Patentansprüche

1. Anordnung mit einem Tretlagegehäuse (207), einer Hinterbaustrebe (103) und einer Tretkurbelwelle (303); wobei
die Hinterbaustrebe (103) um eine mit einer Drehachse der Tretkurbelwelle (303) identische Schwenkachse verschwenkbar gelagert ist; **dadurch gekennzeichnet, dass** die Hinterbaustrebe (103) verschwenkbar in dem Tretlagergehäuse (207) gelagert ist.

2. Anordnung nach Anspruch 1; **dadurch gekennzeichnet, dass**
die Hinterbaustrebe (103) mit einem Lagerauge (201), welches das Tretlagergehäuse (207) mindestens teilweise umschließt, verschwenkbar in dem Tretlagereghäuse (207) gelagert ist.

3. Anordnung nach dem vorhergehenden Anspruch; **dadurch gekennzeichnet, dass** das Lagerauge (201) zweistückig ausgeführt sind.

4. Anordnung nach einem der vorhergehenden Ansprüche; **dadurch gekennzeichnet, dass**
die Tretkurbelwelle (303) drehbar in dem Tretlagergehäuse (207) gelagert ist.

5. Anordnung nach dem vorhergehenden Anspruch; **gekennzeichnet durch** ein Wellenlager (309), mit dem die Tretkurbelwelle (303) drehbar in dem Tretlagergehäuse (207) gelagert ist, und ein Strebenlager (301), mit dem die Hinterbaustrebe (103) verschwenkbar in dem Tretlagergehäuse (207) gelagert ist; wobei das Wellenlager (309) mindestens teilweise innerhalb des Strebenlagers (301) angeordnet ist.

6. Anordnung nach einem der vorhergehenden Ansprüche; **gekennzeichnet durch** zwei Hinterbaustreben (103), eine Ausgangswelle (305) und ein Getriebe (315) und/oder einen Motor; wobei
die Tretkurbelwelle (303) und die Ausgangswelle (305) über das Getriebe (315) drehwirksam miteinander gekoppelt oder koppelbar sind und/oder der Motor triebwirksam mit der Ausgangswelle (305) verbunden oder verbindbar ist; wobei das Getriebe (315) und/oder der Motor mindestens teilweise axial zwischen zwei Strebenlagern (301) angeordnet sind, mit denen jeweils eine Hinterbaustrebe (103) verschwenkbar in dem Tretlagergehäuse (207) gelagert ist.

7. Anordnung nach dem vorhergehenden Anspruch; **gekennzeichnet durch**
ein Wellenlager (311), mit dem die Tretkurbelwelle (303) drehbar in der Ausgangswelle (305) gelagert ist, und ein Wellenlager (313), mit dem die Ausgangswelle (305) drehbar in dem Tretlagergehäuse (207) gelagert ist; wobei
das Wellenlager (311), mit dem die Tretkurbelwelle (303) drehbar in der Ausgangswelle (305) gelagert ist, mindestens teilweise innerhalb des Wellenlager (313) angeordnet ist, mit dem die Ausgangswelle (305) drehbar in dem Tretlagergehäuse (207) gelagert ist; und wobei
das Wellenlager (313), mit dem die Ausgangswelle (305) drehbar in dem Tretlagergehäuse (207) gelagert ist, mindestens teilweise innerhalb des Strebenlagers (301) angeordnet ist.
